(19) Europäisches Patentamt / European Patent Office / Office européen des brevets

(11) **EP 4 702 841 A1**

(12) **DEMANDE DE BREVET EUROPEEN**

(43) Date de publication:
**04.03.2026 Bulletin 2026/10**

(21) Numéro de dépôt: **25199975.1**

(22) Date de dépôt: **03.09.2025**

(51) Classification Internationale des Brevets (IPC):
**A01N 25/28** (2006.01)    **A01P 3/00** (2006.01)

(52) Classification Coopérative des Brevets (CPC):
(C-Sets disponibles)
**A01N 25/28; A01P 3/00**    (Cont.)

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **03.09.2024 FR 2409372**

(71) Demandeur: **Centre Scientifique Et Technique Du Batiment (CSTB)**
**77420 Champs sur Marne (FR)**

(72) Inventeurs:
• **ANTON, Rukshala**
  **77185 LOGNES (FR)**
• **KHATTABI, Chaïma**
  **95100 ARGENTEUIL (FR)**
• **MOULARAT, Stéphane**
  **77200 TORCY (FR)**

(74) Mandataire: **Plasseraud IP**
**104 Rue de Richelieu**
**CS92104**
**75080 Paris Cedex 02 (FR)**

(54) **MICROCAPSULES POUR UNE LIBÉRATION CONTRÔLÉE DANS LES MILIEUX CLOS**

(57)     L'invention concerne des microcapsules à base de chitosane pour détecter, traiter ou prévenir la croissance de champignons dans un environnement clos. Ces microcapsules libèrent au moins un composé lorsqu'elles sont déclenchées lors du développement fongique. Ce mécanisme de libération sélective assure une utilisation efficace des composés et minimise les déchets.

L'invention concerne également un kit de détection d'un développement fongique pour les environnements clos, le kit comprenant les microcapsules et un détecteur configuré pour détecter les composés et émettre un signal indiquant la présence d'un développement fongique.

[Fig. 1]

EP 4 702 841 A1

(52) Classification Coopérative des Brevets (CPC):
(Cont.)

C-Sets
**A01N 25/28, A01N 65/24**

**Description**

**Domaine technique**

La présente divulgation concerne des microcapsules pour détecter, traiter ou prévenir le développement fongique dans des milieux clos.

**Technique antérieure**

Les champignons, tels que les moisissures, présents dans les environnements intérieurs clos peuvent provoquer des allergies, infections et irritations via l'inhalation de spores ou abimer les objets susceptibles de s'y trouver. La gestion du développement fongique à la surface des produits de construction ou de décoration ou à l'intérieur des produits de stockage (par exemple boites en bois, carton, papier, etc.) reposait traditionnellement sur des agents chimiques antifongiques, utilisés à titre préventif et curatif. Toutefois, l'utilisation de tels traitements suscite des inquiétudes quant à leurs effets à long terme sur la santé et l'environnement. Le règlement REACH de l'Union Européenne encourage l'adoption de méthodes alternatives, plus sûres, durables et respectueuses vis-à-vis de l'environnement.

Détecter les champignons, tels que les moisissures, présente un défi majeur en raison de leur nature souvent invisible et cachée. Les champignons peuvent se développer dans des endroits inaccessibles, rendant leur détection précoce particulièrement difficile. En conséquence, de tels traitements sont souvent appliqués de manière indifférenciée. Cela signifie que les produits antifongiques sont déployés dans diverses zones susceptibles d'être touchées par les champignons, sans connaître leur localisation exacte. Bien qu'une application indifférenciée puisse prévenir certaines infestations, elle entraîne également un risque de gaspillage considérable. Les produits utilisés peuvent ne jamais atteindre les zones affectées et rester inactifs, entraînant un surcoût inutile et une inefficacité de déploiement des produits antifongiques. De plus, l'application généralisée de ces traitements peut entraîner des impacts sanitaires et environnementaux négatifs, ajoutant un niveau de complexité supplémentaire à la gestion des champignons.

Il est donc nécessaire de développer des traitements alternatifs visant à détecter, traiter ou prévenir le développement fongique dans des milieux clos, et ainsi à réduire l'exposition des personnes et objets aux champignons nuisibles et limiter les coûts de réhabilitation causés par de telles infestations. Il est également nécessaire que ces traitements permettent de minimiser le gaspillage des produits antifongiques tout en assurant une lutte efficace contre les champignons, mais aussi plus durable et plus respectueuse de l'environnement.

Résumé

La présente divulgation vient améliorer la situation.

Selon un premier aspect, la présente invention concerne des microcapsules à base de chitosane pour détecter, traiter ou prévenir le développement fongique de champignons dans un milieu clos par libération d'au moins un composé contenu dans les microcapsules, la libération étant déclenchée lors du développement fongique.

Les microcapsules à base de chitosane selon l'invention apportent une réponse ciblée en réaction aux substances secrétées ou stimuli générés lors du développement fongique de champignons dans l'atmosphère d'un milieu clos. En étant conçues pour libérer les composés qu'elles contiennent spécifiquement en réponse à ces substances ou stimuli, les microcapsules permettent de détecter, traiter ou empêcher efficacement la croissance des champignons sans dispersion inutile des agents antifongiques, optimisant la fréquence et la quantité de traitements nécessaires au fil du temps, ainsi que leur utilisation et minimisant les déchets potentiels et leur gaspillage. A l'inverse, en l'absence de développement fongique, les microcapsules ne s'ouvrent pas et ne libèrent pas les composés qu'elles contiennent.

De plus, les composés ainsi encapsulés sont protégés d'une volatilisation ou d'une dégradation prématurée. Cette encapsulation prolonge la durée de conservation des composés jusqu'à ce qu'ils soient libérés.

Selon un deuxième aspect, l'invention propose une méthode de détection, de traitement ou de prévention d'un développement fongique dans un milieu clos, la méthode comprenant :

a) la fourniture des microcapsules selon le premier aspect,

b) le déclenchement de l'ouverture des microcapsules lors du développement fongique,

c) la libération d'au moins un composé contenu dans les microcapsules

d) éventuellement, la détection de la présence des champignons, et/ou

e) l'inhibition du développement fongique.

Selon un mode de réalisation, les microcapsules sont présentes dans une concentration entre 1 et 1000 microcapsules par cm$^2$, de préférence entre 1 et 100 microcapsules par cm$^2$, de préférence entre 1 et 50 microcapsules par cm$^2$.

La plage de concentration définie de microcapsules par surface permet d'assurer une répartition optimale des agents actifs sur toute la surface traitée. En dessous, le taux de détection ou de prévention du développement fongique risque de ne pas être satisfaisant, alors qu'une concentration trop importante engendrait une surabondance de microcapsules, et donc une utilisation inutile de celles-ci.

Selon un troisième aspect, l'invention propose un kit de détection d'un développement fongique pour un milieu clos comprenant des microcapsules selon le premier aspect et un détecteur configuré pour détecter la présence d'un composé libéré par les microcapsules et pour émettre un signal notifiant la présence des champignons.

Le kit de détection offre une solution tout-en-un pour la surveillance des champignons, permettant notamment une gestion plus efficace des traitements antifongiques. La capacité du détecteur à émettre un signal lors de la détection de composés, tels que des composés organiques volatils ou des traceurs de type colorants et/ou marqueurs fluorescents, libérés depuis l'intérieur des microcapsules sert de mécanisme d'alerte, facilitant une prise de connaissance rapide de la présence des champignons. En identifiant précisément les zones contaminées, il devient possible d'appliquer des traitements antifongiques supplémentaires de manière ciblée, évitant ainsi le gaspillage.

Selon un quatrième aspect, l'invention concerne un procédé de détection d'un développement fongique dans un milieu clos comprenant :

a) la fourniture d'un kit de détection selon le troisième aspect,

b) le déclenchement de l'ouverture des microcapsules lors du développement fongique des champignons,

c) la libération d'au moins un composé contenu dans les microcapsules,

d) la détection par le détecteur de la présence d'un composé libéré par les microcapsules,

e) l'émission d'un signal par le détecteur pour notifier la présence d'un développement de champignon, et

f) éventuellement, l'inhibition du développement fongique.

Selon un cinquième aspect, l'invention concerne un procédé de fabrication de microcapsules selon l'un des aspects précédents.

L'étape facultative d'inhibition du développement fongique, après la détection, offre une approche proactive non seulement pour identifier mais aussi contrôler la croissance des champignons. Cette stratégie intégrée de détection et d'inhibition contribue à maintenir l'hygiène environnementale et à réduire les risques pour la santé ou les risques d'endommagement ou de fragilisation d'objets se trouvant dans un milieu clos.

Par « inhibition du développement fongique » on entend toute action visant à ralentir, stopper ou empêcher la croissance et la propagation des champignons. Cette action englobe un effet fongistatique empêchant la croissance et la multiplication des champignons sans nécessairement les détruire et/ou un effet fongicide entrainant la destruction des champignons.

**Brève description des dessins**

D'autres caractéristiques, détails et avantages apparaîtront à la lecture de la description détaillée ci-après, et à l'analyse des dessins annexés, sur lesquels :

**Fig. 1**

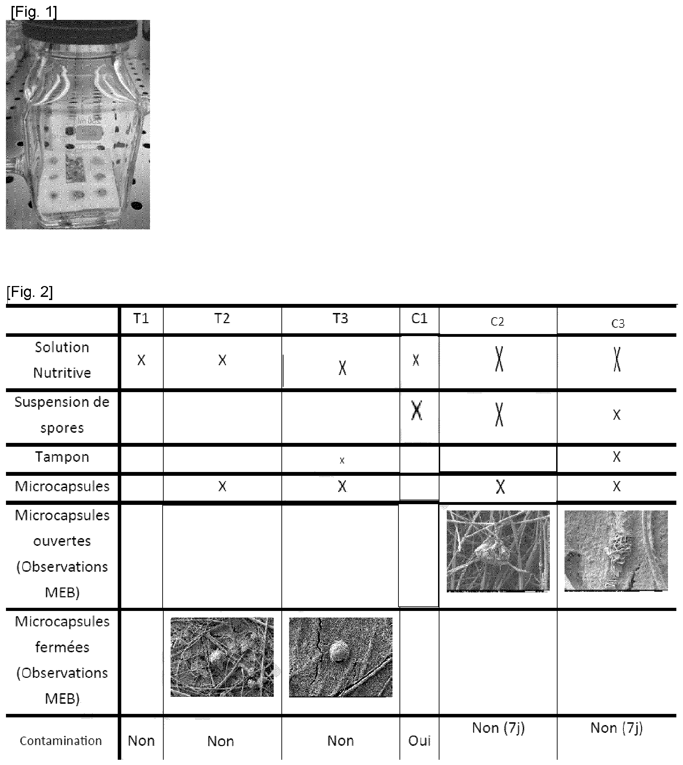

[Fig. 1] montre une photo d'un montage expérimental pour déterminer le pouvoir antifongiques des microcapsules, le montage comprenant une chambre d'émission à l'intérieur de laquelle trois morceaux de fibre de verre contaminées sont disposés en U.

**Fig. 2**
[Fig. 2] montre un tableau des résultats d'analyses et des observations visuelles relatives au pouvoir antifongique des microcapsules comprenant de l'huile essentielle de cannelle.

## Description détaillée

Selon un aspect de la présente invention, les microcapsules à base de chitosane permettent de détecter, traiter ou prévenir le développement fongique dans un milieu clos par libération d'au moins un composé contenu dans les microcapsules, la libération étant déclenchée lors du développement fongique.

Les inventeurs proposent des microcapsules dont la coquille est à base de chitosane, ce choix particulier de la paroi rendant les microcapsules aptes à s'ouvrir dès lors qu'elles se trouvent dans une atmosphère comprenant au moins une substance sécrétée lors du développement fongique ou tout autre stimulus généré lors de ce développement fongique. Son choix est également justifié du fait de ses propriétés de biocompatibilité, de biodégradabilité et de non-toxicité, bactériostatiques, antifongiques et ignifugeantes. L'utilisation du chitosane permettrait donc le ralentissement de la propagation des éventuels incendies tout en étant biocompatible, réduisant ainsi l'impact environnemental associé à l'utilisation de matériaux synthétiques.

La capacité de détection et de réponse des microcapsules améliore la maintenance des milieux clos en minimisant la nécessité d'interventions manuelles fréquentes pour le contrôle des champignons.

Sans vouloir être liés par aucune théorie, les inventeurs estiment que l'exo-B-D-glucosaminidase - une hydrolase pouvant être sécrétée par les champignons- agirait sur la liaison $\beta(1-4)$ du chitosane sur son extrémité non réductrice. Ainsi, les coquilles à base de chitosane des microcapsules se dégraderaient progressivement au contact du milieu spécifique dans lequel se développent les champignons, pour ainsi déclencher l'ouverture de la microcapsule et permettre une libération graduée des composés organiques volatils.

Le chitosane peut avoir un degré de désacétylation compris entre 0% et 50%, de préférence inférieur à 30%. Un degré inférieur à 20% peut renforcer le caractère polycationique des chaînes de chitosane.

Par « microcapsule », on entend une structure creuse sphérique ou sphéroïdale de taille micrométrique appelée paroi ou coquille ou enveloppe dans laquelle est enfermée une substance.

Par « coquille » ou « enveloppe » ou « paroi », on entend une structure externe qui entoure et protège le contenu d'une microcapsule. Ces termes peuvent être employés de manière interchangeable. La fonction principale de la coquille est de fournir une barrière physique entre l'intérieur de la microcapsule et son environnement extérieur, empêchant ainsi la diffusion ou la libération prématurée du contenu encapsulé. La coquille peut être formée d'une seule couche ou d'au moins deux couches superposées.

Les microcapsules peuvent être mononucléées (ou monocores) ou polynucléées (ou polycores). Par « mononuclée ou monocore », on entend une microcapsule dont l'ensemble du contenu encapsulé se trouve à l'intérieur de la coquille sans compartimentation. Par « polynuclée ou polycore », on entend une agrégation de microcapsules monocores.

Les microcapsules peuvent présenter une seule coquille ou au moins deux coquilles disposées de façon concentrique, permettant une libération progressive des COV.

Selon le mode de réalisation, les microcapsules peuvent être multicouches.

L'épaisseur de la coquille peut varier entre 1 nm et 40 $\mu$m, de préférence entre 50 nm et 20 $\mu$m.

Par « milieu clos », on entend un milieu entouré ou fermé par des barrières physiques, telles que des murs, des plafonds ou d'autres enceintes, afin de limiter ou de contrôler l'échange de matière et d'énergie avec l'environnement extérieur. Cette configuration permet de réguler les conditions environnementales telles que la température, l'humidité et la qualité de l'air. Les environnements clos peuvent varier en échelle et en complexité. Des exemples à plus petite échelle incluent les boîtes d'archives, qui sont conçues pour protéger les documents et les photographies des dommages environnementaux en contrôlant l'exposition à la lumière, à l'humidité et à l'air. Des exemples à grande échelle sont des pièces d'habitation ou de stockage.

Les termes « environnement clos », « espace clos » ou « milieu clos » peuvent être utilisés de manière interchangeable.

Par « libération », on entend la libération d'au moins un composé contenu dans les microcapsules depuis l'intérieur vers le milieu environnant.

Au sens de l'invention, la libération peut être déclenchée par la présence d'au moins une substance libérée lors du développement fongique et/ou d'un stimulus généré lors d'un tel développement.

Par « stimulus généré lors d'un développement fongique », on entend tout signal ou changement dans l'environnement induit par la croissance et le métabolisme des champignons. Ces stimuli peuvent être de nature chimique ou physique. Les stimuli de nature chimique correspondent en réalité aux substances secrétées lors du développement fongique, telles que les enzymes, les métabolites secondaires, les composés organiques volatils fongiques, les acides, les substances fongiques, et/ou les mycotoxines ou un mélange de celles-ci.

Les stimuli de nature physique correspondent au changement des propriétés dans l'environnement, tel qu'un changement de pH, une action mécanique, par exemple par la croissance des hyphes, une modification de la structure du substrat sur lequel les champignons se développent ou un changement d'électronégativité pouvant interférer avec les interactions des éléments constitutifs de l'enveloppe de la capsule.

Par « sécrétion », on entend des champignons la libération d'enzymes, d'acides, de composés organiques volatiles fongiques ou d'autres substances produites par les champignons. Pour les champignons, la sécrétion de ces substances traduit un développement fongique, ladite sécrétion intervenant préalablement à une excrétion des déchets résultant de ses activités métaboliques. Des acides organiques, tels que les acides gluconique, citrique, oxalique, malique, succinique, itaconique, sont produits en quantités variables durant l'activité métabolique des champignons.

Par « champignons », on entend des organismes ayant un mode de vie filamenteux, c'est-à-dire que leur appareil végétatif est composé de filaments appelés hyphes, qui forment un réseau connu sous le nom de mycélium. Contrairement aux levures, qui sont des champignons unicellulaires, les champignons se reproduisent par des spores, qui sont souvent en suspension dans l'air et peuvent coloniser diverses surfaces. Ils se nourrissent par absorbotrophie, c'est-à-dire qu'ils sécrètent dans leur environnement des enzymes digestives qui dégradent la matière organique en nutriments, puis ils absorbent ces nutriments. Le mycélium assure plusieurs grandes fonctions biologiques, telles que l'exploration, la nutrition, la croissance ou la défense. Les champignons sécrètent des enzymes extracellulaires puissantes (de type hydrolases) leur permettant de décomposer la matière organique, même la plus résistante (par exemple, le bois) en brisant les polymères en monomères. Les champignons produisent des enzymes ou des acides qui contribuent à l'hydrolyse (notamment de l'amidon par *Aspergillus niger, Penicillium expansum* ou de la cellulose par *Trichoderma,* par exemple) ou à l'acidification des constituants sur lesquels elles croissent. De plus, les champignons peuvent causer des dommages structurels aux objets et aux bâtiments.

Les champignons peuvent être choisis parmi les micromycètes, tels que les moisissures et les macromycètes, tels que les mérules.

Des exemples de champignons micromycètes incluent *Aspergillus, Penicillium, Cladosporium, Stachybotrys chartarum, Alternaria, Chaetomium, Fusarium, Trichoderma, Ulocladium, Mucor, Rhizopus, Botrytis, Acremonium, Epicoccum, Geotrichum, Scopulariopsis, Wallemia, Bipolaris, Curvularia,* et *Phoma.* Dans des boîtes d'archives ou des zones de stockage avec une ventilation limitée et des environnements contrôlés, certains champignons sont plus répandus en raison de la présence de matériaux organiques comme le papier, les textiles et les adhésifs. Les champignons courants dans ces environnements peuvent être *Aspergillus, Penicillium, Cladosporium, Chaetomium, Stachybotrys chartarum* (moisissure noire), *Alternaria, Trichoderma, Fusarium, Mucor, Wallemia sebi.* Les moisissures courantes à l'intérieur des peuvent être *Aspergillus, Penicillium, Cladosporium, Stachybotrys chartarum* (moisissure noire), *Alternaria, Chaetomium, Ulocladium, Acremonium, Fusarium, Mucor.*

Des exemples de champignons macromycètes incluent les mérules, tels que *Serpula spp,* par exemple *Serpula lacrymans.*

Des exemples d'enzymes sécrétées (ou enzymes exocellulaires) par les champignons incluent les hydrolases, telles que les amylases, les protéases, les lipases, les cellulases, les pectinases, les phytases. Les amylases sont des enzymes qui décomposent les polysaccharides tels que l'amidon et le glycogène en sucres plus simples comme le glucose. Les champignons peuvent produire des amylases pour décomposer des substrats riches en amidon. Les protéases, ou enzymes protéolytiques, décomposent les protéines en acides aminés. Les champignons produisent ces enzymes pour digérer les protéines présentes dans leur environnement, facilitant ainsi l'absorption des acides aminés. Les lipases sont des enzymes qui décomposent les lipides en acides gras et en glycérol. Les champignons peuvent produire des lipases pour dégrader les matières grasses et extraire des sources de carbone et d'énergie. Les cellulases décomposent la cellulose, un polysaccharide présent dans les parois cellulaires des plantes. Les champignons produisent des cellulases pour dégrader la cellulose et accéder aux sucres qu'elle renferme. Les pectinases décomposent la pectine, un composant des parois cellulaires des plantes. Ces enzymes sont produites par certains champignons pour dégrader la matière végétale. Les phytases décomposent le phosphate organique présent dans les phytates, des composés présents dans les graines et d'autres matières végétales. Certains champignons produisent des phytases pour libérer le phosphate lié dans ces composés.

Ces enzymes permettent aux champignons de coloniser et de prospérer dans divers environnements en décomposant une variété de substrats organiques.

Par « composé » on entend un composé pouvant être encapsulé dans des microcapsules et pouvant être choisi parmi un composé organique volatil, une huile, telle qu'une huile non volatile ou une huile essentielle, un traceur de type COV, colorant et/ou fluorescent, un agent fongicide, un agent fongistatique, ou un mélange de ceux -ci.

Ainsi, les microcapsules peuvent comprendre au moins un composé choisi parmi un composé organique volatil, une huile, telle qu'une huile non volatile ou une huile essentielle, un traceur de type colorant et/ou fluorescent, un agent fongicide, un agent fongistatique, ou un mélange de ceux -ci.

Les traceurs, de préférence lipophiles, peuvent être des traceurs de type colorant et/ou fluorescent. Les traceurs, de préférence lipophiles, peuvent être choisis parmi: la rhodamine B, la rhodamine 6G, le Nile Red, le colorant alimentaire bleu tel que Royal vendu par Colour Mill, le colorant alimentaire rouge tel que Red vendu par Colour Mill, la coumarine 6, le DPH (diphénylhexatriène), la fluorescéine isothiocyanate (FITC), le rouge Nile, les colorants lipophiles fluorescent de carbocyanine, tels que le DiI (1,1'-Dioc18, Dihexadecyl-3,3,3',3'-Tetramethylindocarbocyanine Perchlorate), le DiO (3,3'-Dioctadecyloxacarbocyanine Perchlorate), le DiD (1,1'-Dioctadecyl-3,3,3',3'-Tetramethylindodicarbocyanine Perchlorate), le DiR, le DiA, le DiB, DiOC18(3), DiOC6(3), DiOC14(3), SP-DiOC18(3), 5,5'-Ph2-DiOC18(3), DilC1(3), DilC1(5), DilC1(7), DilC5(3), DilC12(3), DilC16(3), DilC18(3), DilC18(3), Dilinoleyl Dil, Neuro-Dil, 5,5'-Ph2-DilC18(3), DilC18(5), DilC18(7), Neuro-DiO, DiA (4-(4-dihexadecylaminostyryl)-N-methylpyridinium iodure), DiB (3,3'-dilinoleyl-3,3'-dimethylindodicarbocyanine), DiOC1(3), DilC5(3), 6,6'-Ph2-DilC18(3), le curcumine, l'érythrosine (E127), le rouge allura (E129), le bleu brillant (E133), le jaune de quinoléine (E104), le pyronine Y, l'auramine O, l'oxazine 170, l'acridine orange, la coumarine 1, la coumarine 102, la coumarine 153, la coumarine 314, la coumarine 343, la rhodamine 123, la rhodamine 110, la rhodamine WT, la rhodamine 19, le rouge Soudan I, le rouge Soudan II, l'indocyanine verte (ICG), le carbocyanine C5, le carbocyanine C7, l'aniline jaune, et l'aniline bleue.

Par « composé organiques volatil (COV) », on entend un groupe de composés chimiques organiques qui passent à l'état gazeux dans des conditions de température et de pression normales (ambiantes) en raison de leur pression de vapeur élevée. Ainsi, la directive européenne n° 1999/13/CE 1 définit les COV en se reposant sur la pression de vapeur saturante. Cette directive définit un composé organique volatil comme « *un composé organique ayant une pression de vapeur de 0,01 kPa ou plus à une température de 293,15 K [c'est-à-dire 20 °C] ou ayant une volatilité correspondante dans les conditions d'utilisation particulières* ».

Selon un mode de réalisation, une microcapsule peut contenir un ou plusieurs COV.

Selon un mode de réalisation, au moins un composé organique volatil est choisi parmi le linalol, l'eucalyptol, l'acide cinnamique, la vanilline, l'acétate d'éthyle ou leurs mélanges.

Selon un mode de réalisation, au moins un composé organique volatil est issu d'une huile essentielle. Un tel composé est donc sélectionné parmi les composés constitutifs d'une huile essentielle.

Selon un mode de réalisation, au moins un composé organique volatil est issu d'une huile essentielle sélectionnée parmi la cannelle, le laurier, le laurier noble, le basilic ou leurs mélanges.

Selon un mode de réalisation, une microcapsule peut contenir une ou plusieurs huiles essentielles.

Selon un mode de réalisation, une microcapsule peut contenir au moins deux COV issus chacun des huiles essentielles d'origine botanique différente. Les champignons peuvent présenter différents niveaux de sensibilité vis-à-vis des COV. Ainsi, selon un mode de réalisation, les microcapsules peuvent encapsuler des COV différents, issus d'origine botanique différente, afin de lutter efficacement contre le plus grand nombre d'espèces différentes de champignons.

Selon un mode de réalisation, l'huile essentielle est une huile essentielle de cannelle pouvant contenir au moins sept COV : l'eucalyptol, le linalol, la cinnamaldéhyde, l'eugénol, l'acétate de cinnamyl, le caryophyllène et le benzoate de benzyl. Le composé majoritaire est le cinnamaldéhyde, qui représente autour de 80 % de la masse totale de COV constituant l'huile essentielle de cannelle.

Selon un mode de réalisation, l'huile essentielle est une huile essentielle de laurier noble dont les composés majoritaires sont l'eucalyptol, le limonène, l'α-pinène, 13-pinène, sabinène.

Par « huile essentielle », on entend des huiles qui contiennent des composés organiques volatils (COV) tels que les terpènes, les alcools, les esters, les aldéhydes, les cétones et les phénols. Ces huiles, mélanges complexes de COV, sont connues pour être utilisées en aromathérapie. Parmi les COV des huiles essentielles, on note les terpènes, les alcools, les esters et les phénols.

Avantageusement les huiles essentielles peuvent être choisies parmi les huiles essentielles de cannelle, de basilic, de laurier, de laurier noble, d'arbre à thé, de lavande, de citronnelle, de thym, d'eucalyptus, de clou de girofle, d'origan, de menthe verte, de menthe poivrée, de citron, de citronnelle, de palma rosa, de romarin, de sauge, de géranium, de niaouli, de cèdre, de cyprès, de patchouli, de bergamote, de fenouil, de petit grain, de santal, de bois de cèdre, de coriandre, d'agastache, d'armoise, d'armoise amère, de camphre, de pin sylvestre, de citronnelle, de sassafras, de camomille, de sauge, de sauge sclarée, de genevrier ou mélange d'au moins deux de celles-ci.

Avantageusement les COV dérivés ou non des huiles essentielles peuvent être choisis pour l'encapsulation parmi l'acétate d'éthyle, vanilline terpinéol, Z ou E cinnamaldéhyde, cinnamyl acétate, limonène, pinène, linalol, cymène, terpinènes, géraniol, camphène, eugénol, menthol, thujone, caryophyllène, citronellol, sabinène, terpinolène, eugenol, ylangene, pulegone, borneol, , myrcène, nerol, ocimène, farnésène, d-limonène, α-terpinéol, α-pinène, β-pinène, γ-terpinène, terpinène-4-ol, 3-carène, citral, α-humulène, carvacrol, geranial, isobornéol, γ-terpinène, menthone, eucalyptol, β-myrcène, δ-cadinène, α-terpinyl, citronellal, citronellol, cis-carvone, trans-carvone, p-cymène, β-eudesmol, nérolidol, cis-ocimène, benzaldehyde, thymol, α-phellandrène, β-phellandrène, cis-linalooloxide, α-copaène, β-cubébène, γ-cadinène, α-santalène, β-santalène, α-bisabolène, linalyl-acétate, γ-muurolène, α-thujène, β-thujène, α-gurjunène, α-farnésène, α-fenchène, α-muurolène, β-céphalène, α-guaiène, γ-cadinène, α-bisabolol, α-cédrène, α-copaène, β-elemène, γ-muurolène, α-bisabolène, α-cadinène, α-muurolène, α-curcumène, α-gurjunène, β-curcumène, β-chamigrène, α-sélinène, α-bulnésène, α-eudesmol, β-santalène, β-bisabolène, β-guaiène, β-eudesmol, β-copaène, α-bulnésène, β-sélinène, β-chamigrène, β-bisabolol, β-bourbonène, β-sélinène, γ-eudesmol, β-cadinène, β-curcumène, β-bourbonène, δ-cadinène, δ-elemène, δ-cadinène, δ-cadinène, methylbutyrate, 2,2-dimethoxybutane, ou leurs mélanges, de préférence le linalol, l'eucalyptol, le 1,8-cinéole, le S-limonène, l'allicine, le diallyl sulfide, le diallyl disulfide, diallyle trisulfide, thymol, le propinate de calcium, le salicylaldehyde, l'octanal, l'acide octanoïque, le 2-nonanone, le β-benzene-ethanamine, 2-decanone, β-phellandrene, naphtalen d8, benzaldehyde, γ-terpinene, terpinolene, dimethoxydimethylsilane, trimethoxymethylsilane, methyl butyrate, 2,2-dimethoxybutane, toluene d8, toluene, α-thujene, α-pinene, camphene, sabinene, β-myrcene, cymene, limonene,camphor, δ-Terpineol, borneol, terpinen-4-ol, α-terpineol, naphtalene d8, bornyl acetate, alpha-bergamotene, caryophyllene ou leurs mélanges.

Selon un mode de réalisation, au moins un composé organique volatil est ajouté dans une huile non volatile.

Par « huile » on entend un composé qui présente un caractère lipophile, c'est-à-dire qui, lorsqu'il est introduit à une teneur d'au moins 1% en poids dans l'eau à 20°C, n'est pas soluble dans l'eau.

Par « huile non volatile », on entend une huile qui présente une température d'ébullition généralement supérieure à 300°C sous 101325 Pa et qui ne présente pas ou peu de tension de vapeur à température ambiante. Contrairement aux huiles essentielles, les huiles non volatiles, comme l'huile d'olive ou l'huile de coco, sont plus lourdes et restent dans leur état à température ambiante sans se vaporiser.

L'huile non volatile peut être liquide ou solide (beurre).

Selon un mode de réalisation, les huiles non volatiles peuvent être des huiles végétales pouvant être choisies parmi : huile d'amande douce, huile de coco, huile d'avocat, huile de jojoba, huile d'olive, huile de pépins de raisin, huile de ricin, huile d'argan, huile de tournesol, huile de sésame, huile de pépins de courge, huile d'onagre, huile de bourrache, huile d'argousier, huile d'abricot, huile de pépins de framboise, huile de carthame, huile de noix, huile de pépins de grenade.

Selon un mode de réalisation, les huiles non volatiles peuvent également être des huiles d'origine non végétale pouvant être choisies parmi : glycérine, propylène glycol ou polyéthylène glycol (PEG), tels que PPG -20 méthyl glucose éther 18, PPG-3 benzoate de méthylène, triglycérides capryliques/capriques, diméthicone, cyclopentasiloxane, cyclométhicone, butylène glycol, un mélange d'acides ou alcools gras, tels que l'acide stéarique, acide oléique, acide linoléique, cétyl alcool, cétéaryl alcool, lanoline, esters de jojoba, tétraoléate de sorbitan.

La dissolution du composé organique volatil dans l'huile non volatile peut faciliter un mécanisme de libération contrôlée. Lorsque l'enveloppe de la microcapsule est compromise, par exemple en réponse aux déclencheurs environnementaux spécifiques provenant de la croissance de champignons, le composé organique volatil est progressivement libéré.

Il est noté que les champignons sont également capables de relarguer des COV naturellement, appelé COV d'origine fongique (ou COV fongique, ou FCOV). Parmi les FCOV généralement émis, on retrouve des alcools (hexanol, 2-éthyl-1hexanol, 1-butanol, 3-méthyl-1-butanol, 2-méthyl-1-propanol, 2 terpineol), des terpènes (limonène), des sesquiterpènes (thujopsène, cedrene, farnesene), des cétones (acétonone, butanone, pentanone, 2-hexanone, 3-octanone), des furanes (pentylfurane), du diméthyl disulfide, des aldéhydes, des composés aromatiques (1,3-diméthoxy-benzène), de l'ammoniaque et différents composés amines [7-9]. L'étude de Schuchardt et Kruse a montré que lors de leur phase primaire de croissance, les champignons émettent des FCOV de bas poids moléculaire (alcools, aldéhydes, cétones), peu spécifiques, alors qu'elles produisent des FCOV de haut poids moléculaire au plateau de croissance (sesquiterpènes, hydrocarbures aromatiques), de spécificité supérieure [Schuchardt S, Kruse H. Quantitative volatile metabolite profiling of common indoor fungi : relevancy for indoor air analysis. J Basic Microbiol 2009 ;49 :350-62*]*.

Cette faculté intrinsèque aux champignons de relarguer des FCOV ne permet pas toutefois à elle seule une détection efficace. La majorité des champignons émettent des FCOV à des taux très faibles et de manière intermittente, avec des variations selon le substrat, donc leur émission est peu prédictible et reproductible. La présence des FCOV dans le cadre de la présente divulgation peut éventuellement enrichir la concentration des COV libérés par les capsules.

Selon un mode de réalisation, les microcapsules ne s'ouvrent pas en présence d'eau. Ainsi, les microcapsules ne sont pas sensibles aux conditions d'humidité élevée pouvant se rencontrer dans certains milieux clos.

Selon un mode de réalisation, l'enveloppe de la capsule peut comprendre un mélange de chitosane et une substance polyanionique dont le point isoélectrique pI est supérieur ou égal à 3,5, de préférence supérieur à 4, de préférence entre 4,2 et 6.

Par point isoélectrique (pI), on entend le pH auquel un composé ne porte pas de charge nette, ce qui signifie que le nombre de charges positives est équilibré par le nombre de charges négatives.

En milieu acide, les groupes amine (-NH2) des unités de glucosamine dans le chitosane peuvent être protonés pour devenir des groupes ammonium (-NH3+). Cette protonation confère une charge positive au chitosane. Le point isoélectrique du chitosane peut être supérieur ou égal 6, de préférence entre 6,2 et 7. Le point isoélectrique du chitosane peut être influencé par son degré de désacétylation (DD), qui est la proportion de groupes amine libres (-NH2) par rapport aux groupes acétyle (-COCH3) dans la molécule. Un DD plus faible se traduit par moins de groupes amine disponibles, ce qui se traduit par un point isoélectrique plus bas, par exemple entre 6 et 6,5.

La substance polyanionique peut avoir un point isoélectrique pI supérieur ou égal 3,5, de préférence supérieur à 4, de préférence entre 4,2 et 6 Lorsque le pH est supérieur au point isoélectrique de la substance polyanionique, elle devient globalement chargée négativement. À ce pH, les groupes carboxylates (-COO-) des acides aminés acides ne sont plus neutralisés par des protons, ce qui entraîne une charge nette négative sur la substance. Plus le pH s'éloigne du pI vers des valeurs plus élevées, plus la charge négative devient prononcée.

La substance polyanionique peut être un extrait de protéines, les protéines pouvant être choisies parmi celles d'origine animale ou végétale ou un mélange de celles-ci, de préférence un extrait de protéines de lait, de préférence un isolat de protéines de lactosérum. La substance polyanionique dont le point isoélectrique pI est supérieur à 3,5, tel qu'un extrait de protéines peut participer à la formation de l'enveloppe pendant le processus d'encapsulation. Sans être liés par une théorie, les inventeurs estiment qu'un extrait de protéines, tel qu'un extrait de protéines de lait ou un isolat de protéines de lactosérum, qui est une substance polyanionique dont le point isoélectrique pI est supérieur ou égal 3,5, de préférence supérieur à 4, de préférence entre 4,2 et 6, peut interagir électrostatiquement avec le chitosane polycationique lorsque le pH est ajusté pendant le processus d'encapsulation. Cette interaction permet d'améliorer l'intégrité structurelle, la stabilité des microcapsules et la libération contrôlée du composé ou du mélange contenu.

Sans être lié par une théorie, la substance polyanionique dont le point isoélectrique pI est supérieur ou égal 3,5, de préférence supérieur à 4, de préférence entre 4,2 et 6, telle que l'isolat de protéines de lactosérum peut jouer un rôle dans le mécanisme de libération contrôlée des microcapsules. Lorsque les microcapsules sont exposées à un environnement avec des conditions de pH acides, l'isolat de protéines de lactosérum, en conjonction avec le chitosane, répond à ces stimuli. Cette réponse peut permettre une dégradation progressive des enveloppes et une libération contrôlée du contenu des microcapsules. Les isolats de protéines de lactosérum, dérivés du lactosérum (sous-produit de la fabrication du fromage), sont généralement des protéines d'origine animale. Ils sont biodégradables.

L'isolat de protéines de lactosérum est une forme hautement concentrée de protéines dérivées du lactosérum. Dans sa forme isolée, la protéine de lactosérum est purifiée pour éliminer la majeure partie des glucides (lactose) et des matières grasses, laissant principalement des protéines, dont les principales sont la β-lactoglobuline (point isoélectrique d'environ pH 5,2) et l'α-lactalbumine (point isoélectrique d'environ 4,2). Cette purification est généralement réalisée par un processus de filtration qui élimine les impuretés et les autres composants non protéiques. L'isolat de protéines de lactosérum peut comprendre une concentration en protéines supérieure à 80%, de préférence supérieure à 90% par rapport au poids total de l'isolat.

Les microcapsules peuvent comprendre un ratio entre le chitosane et la substance polyanionique dont le point isoélectrique pI est supérieur ou égal 3,5, de préférence supérieur à 4, de préférence entre 4,2 et 6, telle que l'extrait de protéines, par exemple un extrait de protéines de lait ou un isolat de protéines de lactosérum, entre 10 : 1 et 1 : 10, de préférence entre 5 : 1 et 1 : 5, de préférence encore entre 2 : 1 et 1 : 2, par exemple à 1 : 1. En cas d'excès ou de déficit de chitosane, il y a un risque que des gouttelettes d'huile se mettent à la surface de la paroi externe des microcapsules formées, et donc que l'encapsulation soit plus difficile.

Les protéines de lactosérum peuvent être sensibles à certaines enzymes, telles que des protéases pouvant être sécrétées lors du développement fongique.

Selon un mode de réalisation, les microcapsules ont un diamètre compris entre 1 nm et 100 $\mu$m, de préférence entre 10 nm et 50 $\mu$m, ou entre 1 $\mu$m et 30 $\mu$m, ou entre 10 $\mu$m et 50 $\mu$m, ou entre 30 $\mu$m et 50 $\mu$m.

Selon un deuxième aspect, l'invention concerne une méthode de détection ou de traitement ou de prévention d'un développement fongique dans un milieu clos, la méthode comprenant :

a) la fourniture des microcapsules selon le premier aspect,

b) le déclenchement de l'ouverture des microcapsules lors du développement fongique des champignons,

c) la libération d'au moins un composé contenu dans les microcapsules

d) éventuellement, la détection de la présence des champignons, et

e) l'inhibition du développement fongique des champignons.

Selon un troisième aspect, l'invention propose un kit de détection d'un développement fongique pour un milieu clos comprenant des microcapsules selon le premier aspect et un détecteur configuré pour détecter la présence d'un composé libéré par les microcapsules et émettre un signal notifiant le développement de champignons.

Le composé libéré par les microcapsules peut être un composé organique volatil ou un traceur de type COV, colorant et/ou fluorescent, de préférence lipophile, une huile, telle qu'une huile non volatile ou une huile essentielle, un traceur de type colorant et/ou fluorescent, un agent fongicide, un agent fongistatique, ou un mélange de ceux -ci.

Un détecteur configuré pour détecter la présence d'un composé organique volatil (COV) est un dispositif conçu pour identifier la présence et parfois quantifier les niveaux de ces substances dans l'air. Ces détecteurs utilisent différentes technologies. Parmi ces technologies, les plus courantes sont la chromatographie en phase gazeuse (GC), la spectroscopie de masse (MS), le détecteur à ionisation de flamme (FID), la spectroscopie d'absorption UV-Vis, la spectrométrie infrarouge à transformée de Fourier (FTIR), la spectrométrie de mobilité ionique (IMS), la spectroscopie de photoionisation (PID), la spectroscopie photoacoustique (PAS) ou les capteurs électrochimiques notamment tels que ceux à base de Polymères Conducteurs Electroniques (PCE), les capteurs à semiconducteurs tels que des capteurs MOS, les capteurs PID, les capteurs à ondes acoustiques de surface (SAW - Surface Acoustic Wave), les capteurs à onde acoustique en volume (BAW - Bulk Acoustic Wave), les résonateurs à quartz (QCM - Quartz Crystal Microbalance), les capteurs à fibre optique, les capteurs à fluorescence intrinsèque, les capteurs à fluorescence induite, les capteurs à points quantiques (Quantum Dots), les capteurs à polymères fluorescents, les capteurs à base de protéines fluorescentes, les capteurs à conductivité thermique (TCD Thermal Conductivity Detector) tels que des capteurs à fil chaud et des capteurs à microplaque chauffante, des capteurs catalytiques, des capteurs à adsorption, des capteurs piézoélectriques, des capteurs à microbalance piézoélectrique (Microcantilevers), des capteurs à base de matériaux nanostructurés, des capteurs électro-optiques, des puces RFID fonctionnalisées, pour analyser les échantillons d'air et identifier les COV spécifiques présents. Les COV sont des composés chimiques qui peuvent s'évaporer facilement à température ambiante et sont souvent émis par une variété de sources, y compris les produits de consommation, les matériaux de construction et les processus industriels. La détection des COV est importante pour surveiller la qualité de l'air intérieur et extérieur, ainsi que pour identifier les sources de pollution et les risques pour la santé humaine.

Un détecteur configuré pour détecter la présence d'un traceur type colorant et/ou fluorescent est un dispositif conçu pour identifier la présence et parfois quantifier les niveaux de ces substances sur la surface contaminée. Ces détecteurs utilisent différentes technologies. Parmi ces technologies, les plus courantes sont : le détecteur UV, la loupe à main, la loupe binoculaire, le microscope USB, le microscope numérique portable, la caméra macro pour smartphone, la lampe UV, les caméras à fluorescence, l'outillage fluorescent (utilisé pour la détection de fuites ou la sécurité dans les travaux de l'artisanat.

Un détecteur particulièrement sensible à un composé organique volatil (COV), qui peut être étalonné pour reconnaître sélectivement ledit COV spécifique pourrait permettre d'identifier et d'associer un signal au développement de champignon. Cette technologie permet une détection précoce et précise des infestations fongiques dans les bâtiments ou boite de stockage, ainsi qu'une intervention rapide pour minimiser les risques pour la santé et les dommages matériels.

Selon un quatrième aspect, l'invention concerne une méthode de détection d'un développement fongique dans un environnement clos comprenant :

a) la fourniture d'un kit de détection selon le troisième aspect,

b) le déclenchement de l'ouverture des microcapsules lors du développement fongique,

c) la libération d'au moins un composé contenu dans les microcapsules

d) la détection par le détecteur de la présence d'un composé libéré par les microcapsules,

e) l'émission d'un signal par le détecteur pour notifier la présence d'un développement de champignon, et

f) éventuellement, l'inhibition du développement fongique.

Une telle méthode de détection d'un développement fongique peut s'effectuer par double indices :

Les inventeurs ont avantageusement employé la combinaison de deux de ces indices pour caractériser la libération du composé encapsulé et ainsi mettre au point la solution de traitement fongicide ou fongistatique.

Ainsi, l'ICF (Indice de Contamination Fongique) permet de détecter l'activité fongique et l'ITL (Indice Traceur Localisation) permet de localiser le développement fongique et sont utilisés conjointement de la façon suivante :

ICF non / ITL oui : pas de développement fongique (Linhibition du développement fongique) et détection de la libération des composés ayant un rôle fongicide ou fongistatique, entraînant ainsi l'arrêt du développement fongique ; une telle configuration montre l'efficacité du traitement pour stopper le développement fongique ;

ICF non / ITL non : pas de développement fongique et absence de libération des substances actives fongicides ; une telle configuration montre la durabilité du traitement en l'absence de contamination active et de développement fongique ;

ICF oui / ITL oui : présence de développement fongique et détection de la libération des composés ayant un rôle fongicide ou fongistatique ; une telle configuration montre une saturation du traitement et une reprise de la contamination ;

ICF oui / ITL non : présence de développement fongique et absence de libération des composés ayant un rôle fongicide ou fongistatique ; une telle configuration montre un début de contamination qui n'a pas encore déclenché la libération des composés encapsulés et le traitement.

Selon un cinquième aspect, l'invention concerne un procédé de fabrication de microcapsules selon l'un des aspects précédents, le procédé pouvant être une encapsulation par inversion de phase.

Le procédé de fabrication des microcapsules par encapsulation par coacervation peut comprendre :

- Mélange des constituants de l'enveloppe comprenant du chitosane, et un tensioactif, et éventuellement de la substance polyanionique dont le point isoélectrique pI est supérieur ou égal 3,5, de préférence supérieur à 4, de préférence entre 4,2 et 6, telle qu'un extrait de protéine, par exemple un extrait de protéine de lait ou un isolat de protéines de lactosérum, afin d'obtenir une émulsion,

- Dispersion de l'émulsion dans une phase continue huileuse non miscible pour former des gouttelettes,

- Précipitation des gouttelettes suivie de leur récupération et leur séchage.

Le mélange des constituants peut s'effectuer en ajoutant chaque constituant de l'enveloppe dans une phase aqueuse de manière séquentielle, de préférence sous agitation, éventuellement à une température comprise entre 15 et 70°C. Par exemple, une homogénéisation peut être effectuée à une vitesse de rotation entre 5 000 et 25 000 tr/min, par exemple à l'aide d'un broyeur homogénéisateur. Par exemple, une centrifugation peut être effectuée à une vitesse de rotation entre 500 et 15 000 tr/min, de préférence entre 500 à 1000 tr/min.

Lors du rajout du chitosane, le pH peut être ajusté à une valeur comprise entre 5 et 6. La substance polyanionique ayant un point isoélectrique supérieur ou égal 4,5, de préférence supérieur à 5, de préférence entre 4,5 et 6,7, de préférence autour de 6, telle que l'extrait de protéines, par exemple l'isolat de protéines de lactosérum, peut être rajoutée idéalement dans un ratio massique entre 1:10 et 10:1 par rapport au tensioactif.

Les constituants peuvent être ceux-décrits précédemment.

Le tensioactif peut être choisi parmi le Tween 80, la gélatine, la gomme arabique, la gomme xanthane, l'isolat de protéines de soja (SPI) ou un mélange de ceux-ci. Il permet de stabiliser les gouttelettes par la suite.

L'induction de l'inversion de phase peut s'effectuer en modifiant les conditions du mélange, cela pouvant être accompli par plusieurs méthodes :

- Changement de température : Refroidir ou chauffer le mélange ;

- Ajout d'un composé non-solvant, tel qu'un alcool ;

- Évaporation du solvant des constituants de l'enveloppe, le solvant étant de préférence l'eau.

La récupération des microcapsules peut être réalisée par filtration, centrifugation, ou décantation, suivie d'un lavage pour éliminer les résidus de solvant ou de non-solvant. Les microcapsules peuvent être ensuite séchées.

Selon un mode de réalisation, l'invention concerne un procédé de fabrication de microcapsules selon l'un des aspects précédents, le procédé comprenant :

- Mise sous agitation d'une composition aqueuse acide comprenant du chitosane pendant une durée comprise entre 100 à 200 minutes à une température comprise entre 25 et 70°C, suivi d'un ajustage à un pH compris entre 4 et 7, de préférence entre 5 et 6,

- Ajout d'un tensioactif et éventuellement d'une substance polyanionique dont le point isoélectrique pI est supérieur ou égal 3,5, de préférence supérieur à 4, de préférence entre 4,2 et 6, telle que l'extrait de protéines, de préférence un isolat de protéines de lactosérum, idéalement dans un ratio massique entre 1:10 et 10 :1 et pour obtenir une émulsion,

- Mise sous agitation de l'émulsion pendant une durée comprise entre 10 à 20 minutes à une température comprise entre 15 et 35°C,

- Ajout d'un composé, tel qu'une huile, une huile essentielle, un COV, un traceur de type COV, colorant et/ou fluorescent, de préférence lipophile, ou un mélange de ceux-ci, et mise sous agitation pendant une durée comprise entre 20 à 40 minutes à température ambiante, puis ajout d'un alcool, tel que l'éthanol,

- Homogénéisation pendant une durée comprise entre 5 à 15 minutes à une vitesse de rotation entre 5 000 et 25 000 tr/min, de préférence entre 11 000 et 19 000 tr/min à l'aide d'un broyeur homogénéisateur

- Centrifugation à 500 et 15 000 tr/min, de préférence entre 500 à 1000 tr/min pendant 5 à 15 minutes à une température entre 2 et 10°C ;

- Réalisation de plusieurs lavages avec de l'eau ultra pure ;

- Redispersion dans de l'eau ultra pure pendant 12 à 18 minutes ;

- Séchage pendant une nuit (environ 12h) dans un dessiccateur ou par lyophilisation.

L'efficacité d'encapsulation permet de déterminer la quantité d'huile encapsulée en fonction de la quantité de composé, telle qu'une huile initialement présente. Ce paramètre se calcule par le rapport suivant, à l'aide notamment d'une analyse par spectroscopie UV-visible :

$$(EE) \ \% = \frac{Taux \ d'huile \ détecté}{Taux \ d'huile \ initialement \ présent} x100$$

L'efficacité d'encapsulation EE est améliorée lorsque la durée d'agitation après l'ajout de l'huile est supérieure à 20 minutes. Il en est de même lorsque le pH est ajusté entre 5 et 6, où l'efficacité d'encapsulation EE est améliorée par rapport au cas où le pH est supérieur à 7.

Le séchage peut se faire par lyophilisation, permettant la synthèse des microcapsules ayant une morphologie ronde et intactes.

**Exemples**

**Exemple 1. Préparation des microcapsules à base d'huile essentielle**

Des microcapsules contenant une huile essentielle ont été préparées selon le protocole suivant :

- Placer 60 mg de chitosane (poids moléculaire entre 100 et 300 g/mol, vendu par ThermoScientificl) dans 20 mL d'eau ultra pure ;

- Ajuster le pH à 3 avec de l'acide acétique (vendu par Acros Organics, pureté 99,8%) afin de dissoudre le chitosane ;

- Agiter pendant 150 minutes à 50 °C ;

- Ajuster le pH compris entre 5 et 6 avec du NaOH 2M à 25 °C ;

- Ajouter 60 mg d'isolat de protéine de lactosérum (vendu par Lactalis) et 20 mg de Polysorbate 80 (vendu sous la référence Tween 80 par Chimie-Plus Laboratoire) ;

- Agiter pendant 15 minutes à 25 °C ;

- Ajouter 80 mg d'huile essentielle ;

- Agiter pendant 30 minutes ;

- Ajouter 100 mL d'éthanol absolu (vendu par Carlo Erba)

- Homogénéiser pendant 10 minutes à 14 000 tr/min à l'aide d'un broyeur homogénéisateur IKA modèle T18 (1 à 1 500 mL et 3 500 à 24 000 tr/min) ;

- Centrifuger à 800 tr/min pendant 10 minutes à 4 °C ;

- Réaliser plusieurs lavages avec de l'eau ultra pure ;

- Redisperser dans de l'eau ultra pure pendant 15 minutes ;

- Sécher pendant une nuit dans un dessiccateur.

Ce protocole peut être appliqué aux différentes huiles essentielles, d'une origine botanique unique ou d'origines botaniques différentes.

Les huiles essentielles utilisées pour préparer les microcapsules employées dans les exemples ci-après sont l'huile essentielle de cannelle (vendue par AromaZone) - exemple 2 et l'huile essentielle de laurier noble (vendue par AromaZone) - exemple 3.

## Exemple 2. Evaluation de la capacité d'inhibition des microcapsules enfermant une huile essentielle de cannelle

L'objectif de cette évaluation est de déterminer si les microcapsules libèrent l'huile essentielle qu'elles renferment avec le développement fongique et si elles parviennent à inhiber la souche testée. Pour ce faire, un Indice de Contamination Fongique a été calculé (ICF). Cet indice évalue l'activité des micromycètes à l'aide des Composés Organiques Volatils (FCOV) qu'elles émettent, mais, dans le cadre de la présente divulgation, aussi des COV libérées par les microcapsules. En effet, les COV sont présents dès le début du développement fongique et durant toutes les phases de croissance. Des prélèvements actifs de COV ont été réalisés sur tubes Tenax. Ces COV sont analysés sur une chromatographie en phase gazeuse et leur identification est faite à l'aide du spectromètre de masse. Dans le cas de l'évaluation, il a été nécessaire de contaminer un matériau puis de le déposer dans une chambre d'émission en verre de 300 mL, inerte vis-à-vis des COV, en s'assurant que les conditions de croissance fongique sont respectées.

Le matériau qui a été sélectionné est de la fibre de verre et la souche est *Aspergillus brasiliensis* (IHEM 05077), issue de la collection de l'Institut d'Hygiène et d'Epidémiologie de Bruxelles - section mycologie (IHEM).

Avant de procéder à une contamination des matériaux, une culture est réalisée sur milieu avoine qui constitue un milieu riche, avec 7 jours d'incubation à 25°C à l'obscurité (étuve Incucell, Fisher Bioblock). Une fois les 7 jours passés, une suspension de spores est préparée. Elle est réalisée en récupérant, à l'aide d'une anse, les spores développées par la souche. Elles sont ensuite dispersées dans de l'eau ultra pure stérilisée. Cette suspension permet de contaminer la fibre de verre.

La fibre de verre étant un milieu inerte, il est nécessaire d'enrichir le milieu pour avoir un rapport C/N égal à 30. Le rapport C/N est un rapport molaire du carbone (C) par rapport à l'azote (N) dans un environnement donné. Pour cela, la suspension de spores est mélangée à 50 % avec une solution nutritive (SN).

Le protocole de préparation de la solution nutritive (SN) est présenté ci-dessous :

1) Préparation d'une solution de 100 mL de sel minéraux dans de l'eau ultra pure en rajoutant 5g de $MgSO_4,7H_2O$ et 0,1g de $FeSO_4,7H_2O$ pour obtenir une solution 1 de sels minéraux.

2) Préparation d'une solution de 200 mL de glucose dans de l'eau ultra pure en rajoutant 31,5 g de glucose pour obtenir une solution 2 de glucose.

3) Préparation d'une solution de 50 mL $NaNO_3$ dans de l'eau ultra pure en rajoutant 3,71875 g de $NaNO_3$ pour obtenir une solution 3 de $NaNO_3$.

4) Préparation de 1L de solution nutritive en mélangeant les 200 mL de solution 2 de glucose, 40 mL de solution 3 de $NaNO_3$ et 10 mL de solution 1 de sels minéraux.

Deux SN différentes ont été réalisées : l'une contenant un tampon à pH = 7,4 l'autre n'en contenant pas. Le tampon est utilisé afin de vérifier si le pH peut être un stimulus de libération des huiles essentielles.

Montage expérimental

Six chambres d'émission (300 mL) ont été mises en place, chacune étant répétées trois fois pour s'assurer de la répétabilité des résultats. Au fond de chaque chambre, sont placées des billes de verre ainsi que 5 mL d'eau ultra pure stérilisée au préalable. Ceci permet de garantir une saturation d'humidité à l'intérieur de la chambre, permettant ainsi le développement fongique. Il est ensuite déposé trois morceaux de fibre de verre découpés avec des dimensions de 2 x 5 cm dans chaque chambre, disposés en U :

Echantillon T1 : Placer 1 mL d'eau sur la fibre de verre, placer la fibre de verre dans un dessiccateur pendant 12h, Placer 3 morceaux de fibre de verre séchés dans une chambre d'émission, déposer 30 μL de solution nutritive SN à 7 endroits différents.

Echantillon T2 : Placer 1 mL de microcapsules sur la fibre de verre, placer la fibre de verre dans un dessiccateur pendant 12h, Placer 3 morceaux de fibre de verre imbibés de microcapsules puis séchés dans une chambre d'émission, déposer 30 μL de solution nutritive SN sans tampon à 7 endroits différents.

Echantillon T3 : Placer 1 mL de microcapsules sur la fibre de verre, placer la fibre de verre dans un dessiccateur pendant 12h, Placer 3 morceaux de fibre de verre imbibés de microcapsules puis séchés dans une chambre d'émission, déposer 30 μL de solution nutritive SN avec tampon à 7 endroits différents.

Echantillon C1 : Placer 1 mL d'eau sur la fibre de verre, placer 3 morceaux de fibre de verre dans une chambre d'émission, contaminer par spots de 30 μL les 3 morceaux de fibre de verre avec un mélange de SN et de suspension de spores pour un rapport 1:1.

Echantillon C2 : Placer 1 mL de microcapsules sur la fibre de verre, placer la fibre de verre dans un dessiccateur, placer les 3 morceaux de fibre de verre imbibés de microcapsules puis séchés dans une chambre d'émission, contaminer par spots de 30 μL les 3 morceaux de fibre de verre avec un mélange de SN sans tampon et de suspension de spores pour un rapport 1:1.

Echantillon C3 : Placer 1 mL de microcapsules sur la fibre de verre, placer la fibre de verre dans un dessiccateur, placer les 3 morceaux de fibre de verre imbibés de microcapsules puis séchés dans une chambre d'émission, contaminer par spots de 30 μL les 3 morceaux de fibre de verre avec un mélange de SN avec tampon et de suspension de spores pour un rapport 1:1.

Une fois que les chambres d'émission avec les morceaux de fibre de verre fibre de verre contaminés ou non ont été préparées, l'air à l'intérieur des chambres a été renouvelé.

Ces chambres ont ensuite été mises dans une étuve durant 7 jours. A l'issue des 7 jours, un prélèvement sur tube Tenax a été réalisé à l'aide de ce même montage en y intégrant les chambres laissées à l'étuve durant 7 jours. Le tube Tenax a pour rôle de piéger tous les COV de l'air filtré sortant de la chambre avec charbon actif.

Les tubes Tenax ont ensuite été analysés par chromatographie. Cette analyse a permis de déterminer la présence de COV relatifs à la croissance de la souche testée mais également ceux relatifs à l'huile essentielle. Pour cela, un suivi de l'acide cinnamique (composé majoritaire de l'huile essentielle de cannelle) a également été réalisé.

Les paramètres d'analyse utilisés conformes aux normes :

- NF EN ISO 16000-6 (2012) : Air intérieur - Partie 6 : dosage des composés organiques volatils dans l'air intérieur des locaux et chambres d'essai par échantillonnage actif sur le sorbant Tenax TA(R), désorption thermique et chromatographie en phase gazeuse utilisant MS ou MS/FID

- NF EN 16516 (2017) : Produits de construction : évaluation de l'émission de substances dangereuses - Détermination des émissions dans l'air intérieur.

Les chambres d'émission témoins et contaminées ont été laissées durant 7 jours dans une étuve à 25 °C. Après 7 jours, des prélèvements d'air ont été réalisés afin de piéger les COV présents.

En combinant les résultats d'analyses et les observations visuelles, il a été possible de conclure quant à la capacité d'inhibition fongique des microcapsules d'HE de cannelle (Figure 2). Les examens visuels ont permis d'affirmer la présence d'un développement fongique.

Les premières observations visuelles montrent que les chambres témoins ne présentent pas de développement fongique. Ces chambres ont donc été analysées et l'absence de développement fongique été confirmée (indiqué par la case « contamination oui/non »).

Les chambres contaminées ne contenant pas de microcapsules d'HE présentent un développement fongique tandis que celles qui en contiennent, que ce soit avec ou sans tampon pH ne montrent pas de développement fongique. Ceci tend à montrer que les microcapsules ont libéré l'huile essentielle. La fibre de verre est tâchée par la contamination réalisée mais il n'y a pas de sporulation, ce qui indique qu'il n'y a pas, visuellement, de développement fongique. Il est également intéressant de noter que visuellement, il n'y a pas de développement fongique lorsqu'il y a la présence du tampon pH (C3). Par conséquent, la diminution du pH ne serait pas le seul paramètre qui permette de libérer l'huile essentielle contenu dans les microcapsules. La libération viendrait notamment d'enzymes secrétées par les champignons.

L'ajout de solution nutritive et donc d'eau ne dégrade pas l'intégrité structurelle des microcapsules. En l'absence de champignons, il n'a pas été observé de microcapsules ouvertes, tout comme il n'a pas été observé de microcapsules intègres en présence de champignons.

Dans l'ensemble des essais où les microcapsules sont cassées, il n'a pas été observé de croissance fongique à 7 jours. Seul l'essai avec champignons sans microcapsules a permis un développement fongique.

Dans le cas de conservation de documents dans des boîtes d'archives, par exemple, cette temporalité de 7 jours est suffisante pour mettre à l'abri ces documents avant le début d'un développement fongique.

**Exemple 3. Evaluation de la capacité d'inhibition des microcapsules enfermant une huile essentielle de laurier noble**

Le même protocole que celui de l'exemple 2 a été réalisé avec des microcapsules contenant de l'huile de laurier noble, avec la différence que huit chambres d'émission ont été utilisées, dont deux contrôles sans SN. En l'absence de SN, les moisissures n'ont pas pu se développer, faute de nutriments.

Echantillon T1 : Placer 1 mL d'eau sur la fibre de verre, placer la fibre de verre dans un dessiccateur pendant 12h, Placer 3 morceaux de fibre de verre non contaminés dans une chambre d'émission, déposer 30 $\mu$L de solution nutritive SN à 7 endroits différents.

Echantillon T2 : Placer 1 mL de microcapsules sur la fibre de verre, placer la fibre de verre dans un dessiccateur pendant 12h, Placer 3 morceaux de fibre de verre dans une chambre d'émission déposer 30 $\mu$L de suspension de pores à 7 endroits différents.

Echantillon T3 : Placer 1 mL de microcapsules sur la fibre de verre, placer la fibre de verre dans un dessiccateur pendant 12h, Placer 3 morceaux de fibre de verre contaminés dans une chambre d'émission, déposer 30 $\mu$L de suspension de pores à 7 endroits différents, déposer 30 $\mu$L de solution nutritive SN à 7 endroits différents.

Echantillon C1 : Placer 1 mL d'eau sur la fibre de verre, placer 3 morceaux de fibre de verre dans une chambre d'émission, contaminer par spots de 30 $\mu$L les 3 morceaux de fibre de verre avec un mélange de SN et de suspension de spores pour un rapport 1:1.

Echantillon C2 : Placer 1 mL de microcapsules sur la fibre de verre, placer la fibre de verre dans un dessiccateur, placer les 3 morceaux de fibre de verre imbibés de microcapsules puis séchés dans une chambre d'émission, contaminer par spots de 30 $\mu$L les 3 morceaux de fibre de verre avec un mélange de SN sans tampon et de suspension de spores pour un rapport 1:1.

Echantillon C3 : Placer 1 mL de microcapsules sur la fibre de verre, placer la fibre de verre dans un dessiccateur, placer les 3 morceaux de fibre de verre imbibés de microcapsules puis séchés dans une chambre d'émission, contaminer par spots de 30 $\mu$L les 3 morceaux de fibre de verre avec un mélange de SN sans tampon et de suspension de spores pour un rapport 1:1.

Les résultats sont présentés dans le Tableau 1 ci-dessous.

[Tableau 1]

|  | Contrôle SN | T1 | T2 | T3 | Contrôle SNC | C1 | C2 | C3 |
|---|---|---|---|---|---|---|---|---|
| Solution Nutritive |  | X |  | X |  | X |  | X |
| Suspension de Spores |  |  | X | X |  |  | X | X |
| Microcapsules |  |  |  |  | X | X | X | X |
| Contamination après 7j (inspection visuelle) | Non | Non | Non | Oui | Non | Non | Non | Non |

Quand il y a un début de développement fongique, des capsules ouvertes et/ou fissurées ont été observées, stoppant la formation du réseau mycélien (contrairement au témoin sans capsules). A contrario, en l'absence de moisissures, les capsules ne montrent pas de fissures. Ces observations visuelles ont donc montré que les capsules ont été efficaces de manière locale.

**Revendications**

1. Microcapsules à base de chitosane pour détecter, traiter ou prévenir le développement fongique de champignons dans un milieu clos par libération d'au moins un composé contenu dans les microcapsules, la libération étant déclenchée lors du développement fongique.

2. Microcapsules selon la revendication 1, où au moins un composé est un composé organique, de préférence issu d'une huile essentielle.

**3.** Microcapsules selon la revendication 2, dans lesquelles l'huile essentielle peut être sélectionnée parmi la cannelle, le laurier, le laurier noble, le basilic ou leurs mélanges.

**4.** Microcapsules selon l'une des revendications 1 à 3 où au moins un composé peut être choisi parmi le linalol, l'eucalyptol, l'acide cinnamique, la vanilline, l'acétate d'éthyle ou leurs mélanges.

**5.** Microcapsules selon l'une des revendications 1 à 4, où au moins un composé est ajouté dans une huile non volatile.

**6.** Microcapsules selon l'une des revendications 1 à 5, dont l'enveloppe comprend un mélange de chitosane et une substance polyanionique dont le point isoélectrique pl est supérieur ou égal 3,5, de préférence supérieur à 4, de préférence entre 4,2 et 6, et de préférence ladite substance polyanionique est un extrait de protéines, de préférence un extrait de protéines de lait, de préférence encore un isolat de protéines de lactosérum.

**7.** Microcapsules selon l'une des revendications 1 à 6, où les microcapsules ont un diamètre compris entre 1 et 100 $\mu$m.

**8.** Méthode de détection ou de traitement ou de prévention d'un développement fongique dans un milieu clos, la méthode comprenant :

    a) la fourniture des microcapsules selon l'une des revendications 1 à 7,
    b) le déclenchement de l'ouverture des microcapsules lors du développement fongique,
    c) la libération d'au moins un composé contenu dans les microcapsules,
    d) éventuellement, la détection de la présence des champignons, et
    e) l'inhibition du développement fongique.

**9.** Méthode selon la revendication 8, où les microcapsules sont présentes dans une concentration entre 1 à 1000 capsules par cm2.

**10.** Kit de détection d'un développement fongique dans un milieu clos, comprenant :

    - des microcapsules selon l'une des revendications 1 à 7 ;
    - un détecteur configuré pour détecter la présence d'un composé libéré par les microcapsules et pour émettre un signal notifiant la présence des champignons.

**11.** Méthode de détection d'un développement fongique dans un milieu clos, la méthode comprenant :

    a) la fourniture d'un kit de détection selon la revendication 9,
    b) le déclenchement de l'ouverture des microcapsules lors du développement fongique,
    c) la libération d'au moins un composé contenu dans les microcapsules
    d) la détection par le détecteur de la présence d'un composé organique par les microcapsules,
    e) l'émission d'un signal par le détecteur pour notifier la présence d'un développement de champignon, et
    f) éventuellement, l'inhibition du développement fongique.

[Fig. 1]

[Fig. 2]

| | T1 | T2 | T3 | C1 | C2 | C3 |
|---|---|---|---|---|---|---|
| Solution Nutritive | X | X | X | X | X | X |
| Suspension de spores | | | | X | X | X |
| Tampon | | | x | | | X |
| Microcapsules | | X | X | | X | X |
| Microcapsules ouvertes (Observations MEB) | | | | | | |
| Microcapsules fermées (Observations MEB) | | | | | | |
| Contamination | Non | Non | Non | Oui | Non (7j) | Non (7j) |

Europäisches
Patentamt

European
Patent Office

Office européen
des brevets

**RAPPORT DE RECHERCHE EUROPEENNE**

Numéro de la demande

EP 25 19 9975

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | VILLEGAS-RASCÓN ROCIO ELIZABETH ET AL: "Control of mycotoxigenic fungi with microcapsules of essential oils encapsulated in chitosan", FOOD SCIENCE AND TECHNOLOGY, vol. 38, no. 2, 21 décembre 2017 (2017-12-21), pages 335-340, XP055949568, BR ISSN: 0101-2061, DOI: 10.1590/1678-457x.04817 * abrégé * * 2.5 Preparation of culture medium with EOs-encapsulated microparticles 3.3 Effect of the microcapsules in the radial growth 3.5 Effect of microcapsules in spore germination * ----- | 1-3,8-11 | INV. A01N25/28 A01P3/00 |
| X | CN 113 351 125 A (SHANGHAI INST TECH) 7 septembre 2021 (2021-09-07) * revendication 1; figure 1; tableau 1 * ----- | 1,2,7-11 | |
| X | WO 2023/132811 A1 (NANOMIK BIYOTEKNOLOJI ANONIM SIRKETI [TR]) 13 juillet 2023 (2023-07-13) * revendications 1, 3, 4, 19 * ----- | 1-5,8-11 | DOMAINES TECHNIQUES RECHERCHES (IPC) A01N A01P |
| X | CN 116 076 733 A (SHANGHAI QINGMEI HEALTH TECH CO LTD) 9 mai 2023 (2023-05-09) * revendication 1 * ----- | 1,6,8,9 | |

Le présent rapport a été établi pour toutes les revendications

| Lieu de la recherche | Date d'achèvement de la recherche | Examinateur |
|---|---|---|
| Munich | 18 novembre 2025 | Beligny, Samuel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

# EP 4 702 841 A1

## ANNEXE AU RAPPORT DE RECHERCHE EUROPEENNE
## RELATIF A LA DEMANDE DE BREVET EUROPEEN NO.

EP 25 19 9975

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-11-2025

| Document brevet cité au rapport de recherche | Date de publication | Membre(s) de la famille de brevet(s) | Date de publication |
|---|---|---|---|
| CN 113351125 A | 07-09-2021 | AUCUN | |
| WO 2023132811 A1 | 13-07-2023 | US 2025151719 A1 WO 2023132811 A1 | 15-05-2025 13-07-2023 |
| CN 116076733 A | 09-05-2023 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

**Littérature non-brevet citée dans la description**

- **SCHUCHARDT S** ; **KRUSE H.** Quantitative volatile metabolite profiling of common indoor fungi : relevancy for indoor air analysis. *J Basic Microbiol*, 2009, vol. 49, 350-62